Europäisches Patentamt

European Patent Office

Office européen des brevets

(11) Veröffentlichungsnummer : **0 189 763**
**B1**

(12) # EUROPÄISCHE PATENTSCHRIFT

(45) Veröffentlichungstag der Patentschrift :
15.03.89

(51) Int. Cl.⁴ : **A 22 C 15/00**

(21) Anmeldenummer : **86100212.9**

(22) Anmeldetag : **09.01.86**

(54) **Vorrichtung zum Aufbringen, insbesondere einer Wurstkette auf einem Rauchstab.**

(30) Priorität : 24.01.85 DE 3502274

(43) Veröffentlichungstag der Anmeldung :
06.08.86 Patentblatt 86/32

(45) Bekanntmachung des Hinweises auf die Patenterteilung : 15.03.89 Patentblatt 89/11

(84) Benannte Vertragsstaaten :
**AT BE CH FR GB IT LI NL SE**

(56) Entgegenhaltungen :
**DE-A- 2 610 315**
**DE-A- 3 137 276**
**DE-A- 3 238 023**
**US-A- 4 494 276**

(73) Patentinhaber : **Schnell, Karl**
**Mühlstrasse 28**
**D-7065 Winterbach (DE)**

(72) Erfinder : **Sziede, Alfred**
**D-7064 Geradstetten (DE)**

(74) Vertreter : **Schmid, Berthold et al**
**Patentanwälte Dipl.-Ing. B. Schmid Dr. Ing. G. Birn**
**Falbenhennenstrasse 17**
**D-7000 Stuttgart 1 (DE)**

## Beschreibung

Die Erfindung bezieht sich auf eine Vorrichtung zum Aufbringen eines ablaufenden Stranges aus mit teigigem Medium gefüllter Wursthülle auf einen stabförmigen Träger, insbesondere einer Wurstkette auf einem Rauchstab, mit einem drehbar gelagerten, vom ablaufenden Strang durchsetzbaren Auflegekopf, der zumindest beim Übergeben des Wurststrangs dem freien Ende des Trägers vorgelagert sowie zwischen diesem und dem Auslaß einer Portioniervorrichtung angeordnet ist und einen exzentrisch angesetzten, den ablaufenden Strang untergreifenden Mitnehmer aufweist, wobei die Drehachse des Auflegekopfes parallel zur Träger-Längsachse und zur Längsachse des ablaufenden Wurststranges verläuft, und mit einer Fördereinrichtung für die durch den Mitnehmer gebildeten Wurstschlaufen mit einer zumindest vom Auflegekopf weggerichteten Förderrichtung. Eine derartige Vorrichtung ist durch die DE-A-32 38 023 bekanntgeworden. Beim ablaufenden Wurststrang handelt es sich um einen Naturdarm oder um eine künstliche Wursthülle, in welche mit Hilfe einer Wurstfüllmaschine bzw. Portioniervorrichtung die verschiedensten teigigen Medien, vor allen Dingen aber Wurstbrät eingefüllt sowie in einzelne Portionen unterteilt werden können. Im letzteren Falle entsteht ein fortlaufender Wurststrang mit üblicherweise gleichlangen Würsten, dessen Gesamtlänge durch die Länge der gerafften Wursthülle festgelegt ist. Insbesondere bei der Wurstherstellung kann sich an die Wurstbildung eine Weiterverarbeitung anschließen, beispielsweise das Räuchern der Würste. Weil dies das Hauptanwendungsgebiet der erfindungsgemäßen Vorrichtung ist, wird nachfolgend lediglich noch von Würsten im Sinne von mit Wurstbrät gefüllten Wursthüllen gesprochen, ohne daß dies einschränkend verstanden werden darf.

Zum Räuchern müssen die Würste in eine Rauchkammer gebracht werden. Um letztere optimal ausnutzen zu können, müssen die Würste möglichst in geordneter Weise darin untergebracht sein. Dies ist an sich mit der vorbekannten Vorrichtung möglich. Der ablaufende Wurststrang wird vom Mitnehmer unmittelbar beim Austritt aus dem Auflegekopf untergriffen. Dabei werden durch einen exzentrisch am Auflegekopf angesetzten schrägen Arm des Mitnehmers Windungen oder Schlaufen gebildet. Die Drehbewegung ist so auf die Vorschubbewegung des ablaufenden Wurststrangs abgestimmt, daß der Mitnehmer zwischen zwei Wurstzipfel greift. Weil sich der Mitnehmer um seine Längsachse dreht und er aufgrund einer angeformten Schraubspindel mit einer Fördervorrichtung ausgestattet ist, werden die jeweils gebildeten Wurstschlaufen zum freien Ende des Mitnehmers hin befördert, wobei die Wurstzipfel entlang den Windungen der Förderschnecke gleiten. Die Wursthüllen, insbesondere die Naturdärme, sind aber bei frischen Würsten verhältnismäßig empfindlich, weswegen die Würste im Bereich der dem Mitnehmer zugeordneten, benachbarten Zipfelpaare einer starken mechanischen Belastung unterworfen sind, die zu einem Platzen der einen oder anderen Wurst führen kann. Außerdem wird der Aufnehmer mit zunehmender Schlaufenbildung immer stärker auf Biegung beansprucht. Um insbesondere auch bei schweren Würsten der Belastung gewachsen zu sein und auch eine stets konzentrische Rotation zu gewährleisten, muß man den Mitnehmer besonders stabil ausbilden. Wenn sich sein freies Ende etwas durchbiegt, so führt dies mit jeder Umdrehung des Auflegekopfes zu einem Schleudern zumindest der vordersten Wurstschlaufen.

Die Aufgabe der Erfindung besteht infolgedessen darin, eine Vorrichtung der eingangs genannten Art so weiterzubilden, daß bei weiterhin automatischem, schnellem und platzsparendem sowie gleichmäßigem Aufbringen einer Wurstkette auf dem stabförmigen Träger, insbesondere einem sogenannten Rauchstab, die Wurstkette sicher und schonend zu bilden und an den Rauchstab zu übergeben ist.

Zur Lösung dieser Aufgabe wird erfindungsgemäß vorgeschlagen, daß die Vorrichtung gemäß dem Oberbegriff des Anspruchs 1 entsprechend dem kennzeichnenden Teil dieses Anspruchs ausgebildet ist. Mit dieser Vorrichtung wird der ablaufende Wurststrang in bekannter Weise in Windungen auf dem Mitnehmer abgelegt, um dann vom Mitnehmer an den stabförmigen Träger, insbesondere einen Rauchstab, übergeben zu werden. Forderungsgemäß erfolgt der Transport der Wurstschlaufen vor der Übergabe an den Träger bzw. Rauchstab unter Verzicht auf eine Relativbewegung der Fördervorrichtung gegenüber den aufliegenden Wurstzipfeln äußerst schonend. Dadurch wird die Gefahr des Platzens einzelner Würste zumindest weitgehend ausgeschaltet. Weil die Fördervorrichtung keine rotierende, sondern lediglich eine translatorische Bewegung gegenüber den aufliegenden Wurstschlaufen durchführt, kann es selbst bei schweren Würsten und vielen Wurstschlaufen zu keiner Schleuderbewegung kommen.

Trotzdem ist eine einfache Anpassung an die verschiedenen Wurstlängen und die Gesamtlänge des Wurststranges nach wie vor möglich. Ebenso wie man hinsichtlich des Seitenabstands der einzelnen Wurstschlaufen auf dem Rauchstab od. dgl. keiner Beschränkung unterworfen ist. Der Mitnehmerfinger bildet trotz seiner verhältnismäßig geringen Größe in Bezug auf den langen Mitnehmer des bekannten Standes der Technik wie bei letzterem gleichmäßige Windungen aus der Wurstkette. Etwa beim Übergang von der unteren Flugbahnhälfte in die obere erfaßt er in bekannter Weise die Wurstkette und bildet dabei jeweils eine weitere Windung. Seine Drehgeschwindigkeit muß selbstverständlich auf die Wurstlänge abgestimmt sein, um immer Windungen mit einer bestimmten Wurstzahl zu erhalten und auch sicher zwischen zwei benachbarte Zipfel fassen zu können. Zweckmäßigerweise besteht auch bei dieser Vorrichung jede Windung aus einer geraden Anzahl von beispielsweise vier Würsten.

Erst wenn alle auf diese Weise gebildeten Windungen auf dem Auflegerarm aufgebracht sind, wird der Mitnehmerfinger stillgesetzt und anschließend erfolgt dann durch Umschalten der Fördervorrichtung auf eine entgegengesetzte Bewegung das Ablegen der Windungen auf dem Rauchstab od. dgl., und zwar Windung für Windung. Während der Bildung der Wurstwindungen bewegt sich die Fördervorrichtung vom Auflegekopf weg und während des Ablegens auf dem Rauchstab od. dgl. gegen den Auflegekopf hin. Bei der Bildung der einzelnen Windungen kann die Fördervorrichtung absatzweise oder stetig in Gang gehalten werden. Der Auflegerarm behält für die Dauer der Schlaufenbildung seine Relativlage zum Auflegekopf bei, während er beim Übergeben der Wurstwindungen an den Rauchstab od. dgl. sich von diesem sukzessive entfernt. Dies bedeutet, daß die zuletzt gebildete Windung als erste auf dem stabförmigen Träger abgelegt wird und die zunächst gebildete als letzte.

Die Fördervorrichtung des Auflegerarms weist in sehr vorteilhafter Art ein endloses, umlaufendes Förderelement auf. Solche Förderelemente sind in den verschiedensten Ausführungen bekannt. Eine bevorzugte Ausgestaltung der Erfindung besteht darin, daß das Förderelement der Fördervorrichtung des Auflegerarms eine endlose Kette ist, wobei die Kette über wenigstens einen Teil ihrer Länge mit Mitnehmerzähnen versehen ist. Letztere gewährleisten die Einhaltung eines vorgegebenen Abstands der einzelnen Windungen und den gleichmäßigen Transport der jeweils gebildeten Windungen entlang dem Auflegerarm, solange noch weitere Windungen entstehen. Die Mitnehmerzähne können in vorteilhafter Weise einstückig mit den Kettengliedern bzw. mit Kettengliedteilen gefertigt sein. Dadurch entfällt ein zusätzlicher Montageaufwand. Im übrigen muß die endlose Kette nicht auf ihrer gesamten Länge mit Mitnehmerzähnen ausgestattet sein. Im Grunde genommen reicht es aus, wenn man lediglich ein Kettendrum mit Mitnehmerzähnen versieht. In diesem Falle muß man allerdings darauf achten, daß bei der Bildung der ersten Windung der erste Zahn bzw. die erste Zahnlücke dem mitnehmerfingerseitigen Ende des Auflegerarms zugeordnet ist.

In sehr zweckmäßiger Art ist der Mitnehmerfinger absatzweise antreibbar. Das Ein- und Ausschalten muß auf die Austrittsgeschwindigkeit der Wurstkette aus der Portioniervorrichtung abgestimmt sein. Außerdem ist das Einschalten zweckmäßigerweise dann vorzunehmen, wenn der Mitnehmerfinger einem benachbarten Wurstzipfelpaar zugeordnet oder zuordnenbar ist. Der Mitnehmerfinger bzw. ein ihn tragender Auflegekopf macht beispielsweise nach zwei, drei, vier oder mehreren Würsten jeweils eine Umdrehung. Einer geraden Wurstzahl ist zumindest bei langen und schweren Würsten der Vorzug zu geben. In diesem Sinne kennzeichnet sich eine weitere Variante der Erfindung dadurch, daß der Takt des Antriebs des Mitnehmerfingers mit dem Takt einer taktweise arbeitenden Portioniervorrichtung synchronisierbar ist. Es ist allerdings nicht unbedingt erforderlich, daß die Portioniervorrichtung taktweise arbeitet, vielmehr sind auch Portioniervorrichtungen bekannt, bei denen die Zipfelbildung « kontinuierlich », also ohne taktweises Ein- und Ausschalten der Zipfelbildungseinrichtung erfolgt. In diesem Falle tritt an Stelle eines Taktes der Portioniervorrichtung die Zeitspanne zwischen zwei Wurstzipfelbildungen.

Eine Weiterbildung der Erfindung sieht vor, daß die Fördervorrichtung des Auflegerarms taktweise oder kontinuierlich mittels eines Getriebemotors antreibbar ist.

Die Fördervorrichtung des Auflegerarms ist gemäß einer anderen bevorzugten Ausführungsform der Erfindung mittels eines, insbesondere an dessen mitnehmerfingerfernem Ende angebrachten regelbaren Schnelltaktantriebs taktweise antreibbar. Durch die regelbare Ausbildung ist eine exakte Anpassung an unterschiedliche Wurstlängen und geforderte Windungsgrößen möglich. Ebenso kann der Abstand der Wurstkette auf den Träger stufenlos eingestellt werden, so daß eine Wurstkettenlänge auf den ganzen Träger gleichmäßig aufgelegt werden kann.

Eine weitere Ausgestaltung der Erfindung besteht darin, daß der Auflegerarm mittels eines Getriebemotors hin und her verschiebbar ist, der eine endlose Antriebskette od. dgl. antreibt, welche insbesondere mit dem mitnehmerfingerfernen Ende des Auflegerarms verbunden ist.

Eine andere Ausbildung der Erfindung kennzeichnet sich dadurch, daß das freie Ende des Auflegerarms dasjenige des stabförmigen Trägers beim Aufbringen des ablaufenden Stranges geringfügig überragt. Zweckmäßigerweise sind die räumlichen Verhältnisse so getroffen, daß das freie Ende des Auflegerarms die Bewegungsbahn des Mitnehmerfingers zentrisch durchsetzt, während das freie Ende des stabförmigen Trägers von dieser Bewegungsebene des Mitnehmerfingers einen gewissen Abstand aufweist, der beispielsweise etwa dem Durchmesser eines Umlenkkettenrades für die Förderkette der Fördervorrichtung entspricht oder auch etwas größer ist.

Eine weitere Variante der Erfindung besteht darin, daß der stabförmige Träger an einem drehbaren, insbesondere scheibenförmigen Halter, abnehmbar befestigt ist, wobei die Drehachse des Halters parallel zur Längsachse des Trägers verläuft. Mit Hilfe dieses Halters kann man den stabförmigen Träger genau gegnüber dem Auflegerarm ausrichten. Sobald der stabförmige Träger « beladen » ist, kann man ihn ebenfalls mit Hilfe des Halters vom Auflegeram entfernen und dadurch möglicherweise leichter und bequemer abnehmen. Außerdem eröffnet dies die Möglichkeit, einen weiteren stabförmigen Träger schnellstmöglich in Arbeitsstellung zu bringen, so daß man sich bei der Abnahme des zuvor behängten Trägers ausreichend Zeit lassen kann. Der nächste stabförmige Träger kann beispielsweise in Arbeitsstellung gebracht werden, während man auf das Wurstfüllrohr der Wurstfüllmaschine einen neuen gerafften Darm aufzieht.

Bei einer bevorzugten Ausführungsform der Erfindung weist der Halter für den stabförmigen Träger wenigstens zwei, insbesondere aber mehrere, gleichmäßig entlang einem Kreis angeordnete Aufnahmen für einen Träger auf. Wenn alle Aufnahmen besetzt sind, so kann man beispielsweise bei sechs Aufnahmen nach einer 60°-Drehung den nächsten stabförmigen Träger von einer Bereitschafts- in eine Arbeitsstellung überführen. Der Halter für die stabförmigen Träger ist in sehr vorteilhafter Weise absatzweise antreibbar, also beim genannten Ausführungsbeispiel jeweils um einen Winkel von 60°. In Weiterbildung der Erfindung wird vorgeschlagen, daß der Halter für die stabförmigen Träger mittels eines Getriebemotors mit Bremse antreibbar ist. Es ermöglicht einen raschen Wechsel und eine genau Positionierung gegenüber dem Auflegerarm.

Eine andere Variante der Erfindung kennzeichnet sich dadurch, daß der Halter für die stabförmigen Träger indirekt über einen, insbesondere übersetzenden Zahnriemenantrieb od. dgl. antreibbar ist. Dies ermöglicht, eine passende Übersetzung zu wählen und andererseits den Antrieb des Halters an geeigneter Stelle zu plazieren.

Dieser stabförmige Träger ist gemäß einer weiteren Ausgestaltung der Erfindung mittels eines Aufnehmers in eine Aufnahme des Halters einsetzbar. Dies bedeutet, daß die stabförmigen Träger nicht unmittelbar von Hand, sondern mit Hilfe eines Aufnehmers maschinell gesteuert zum richtigen Zeitpunkt in den Halter eingesetzt werden können. Diesen Halter kann man auch zum Herausnehmen des einen Wurststrang tragenden Trägers verwenden.

Eine andere Ausbildung der Erfindung ist dadurch gekennzeichnet, daß der Aufnehmer eine in Längsrichtung des stabförmigen Trägers verlaufende Montagebewegung und eine quer dazu verlaufende Schwenkbewegung durchführen kann, wobei der Aufnehmer in der ersten Schwenkendstellung einer Übergabeeinrichtung und in der zweiten Schwenkendstellung einer Aufnahme des Halters zugeordnet ist. Zwischen den beiden Schwenkendstellungen kann beispielsweise ein Schwenkwinkel von 90° bis 120° liegen. Er kann im Bedarfsfalle auch kleiner oder noch etwas größer sein. Der stabförmige Träger wird also in diesen Aufnehmer nicht von Hand eingesetzt, vielmehr erfolgt eine Beschickung mit Hilfe der Übergabeeinrichtung. Weil der Aufnehmer sowohl eine Schwenkbewegung als auch eine Verschiebebewegung durchführen kann, muß man darauf achten, daß die Schwenkbewegung immer nur dann durchgeführt wird, wenn der Aufnehmer vom Halter einen Verschiebeabstand, möglichst den maximalen Verschiebeabstand, hat. Dies bedeutet, daß der in den Halter einzusetzende stabförmige Träger nach der Übernahme von der Übergabeeinrichtung zunächst eine Schwenkbewegung und erst nachfolgend eine in seiner Längsrichtung verlaufende Vorschubbewegung durchführt, die ihn dann letztlich in den Halter bringt. Bei letzterem kann es sich um eine Einsteckhalterung handeln, welche den stabförmigen Träger entweder durch die Einschiebebewegung gesteuert oder auch in anderer Weise sicher festhält.

Eine weitere bevorzugte Ausführungsform der Erfindung besteht darin, daß die Übergabeeinrichtung als Hubeinrichtung ausgebildet ist, die in ihrer einen Endstellung einer Zuführvorrichtung für die stabförmigen Träger und in ihrer anderen, insbesondere oberen Endstellung, dem Aufnehmer zugeordnet ist. Die Zuführvorrichtung erhält demnach den stabförmigen Träger nicht von einer Bedienungsperson sondern von der Zuführvorrichtung. Letztere wird jedoch vorzugsweise von Hand mit dem stabförmigen Trägern beschickt. Sie muß so ausgebildet sein, daß sie den stabförmigen Träger bzw. den als nächstes weiterzugebenden stabförmigen Träger in richtiger Zuordnung an die Übergabeeinrichtung weiterreicht. Die Hubeinrichtung kann beispielsweise mit mindestens einem pneumatischen oder hydraulischen Hubzylinder arbeiten. In der Regel ist bei wurstverarbeitenden Maschinen ohnehin Druckluft erforderlich, so daß sich insbesondere eine pneumatisch betätigbare Hubeinrichtung anbietet.

Die Zuführvorrichtung besteht in sehr vorteilhafter Weise aus wenigstens einem, vorzugsweise aber zwei, im seitlichen Abstand angeordneten antreibbaren endlosen Förderbändern, die quer zu den Längsachsen der aufgelegten stabförmigen Träger antreibbar sind. Zwei Förderbänder haben den Vorteil, daß sie bei verhältnismäßig geringer Breite und damit kleinem Platzbedarf die nicht gerade kurzen stabförmigen Träger an ihren beiden Endbereichen sicher abstützten und während des Transports halten können. Zugleich bietet dies die Möglichkeit zu einer weiteren Ausgestaltung der Erfindung, welche darin besteht, daß sich die Übergabeeinrichtung zwischen den beiden Förderbändern befindet. Dies führt zu einer kompakten Bauweise. Falls die stabförmigen Träger nicht genau rechtwinklig zu den tragenden Trummen der Zuführvorrichtung aufgelegt werden, erreicht man trotzdem eine korrekte Ausrichtung gegenüber der Übergabeeinrichtung bzw. Hubeinrichtung, wenn gemäß einer anderen Variante der Erfindung am Ende der tragenden Trumme der Zuführvorrichtung ein Anschlag für die stabförmigen Träger vorgesehen ist. An diesem Anschlag läuft der zunächst aufgelegte Träger auf. Wenn er nicht sofort an die Hubeinrichtung weitergegeben wird, so kann ein zweiter und weiterer stabförmiger Träger an dem bereits am Anschlag anliegenden Träger auflaufen. Auf diese Weise werden auch alle nachfolgenden Träger sauber ausgerichtet.

Eine weitere vorteilhafte Ausführungsform der Erfindung ist dadurch gekennzeichnet, daß der Aufnehmer, insbesondere an seinem drehachsfernen Ende, eine steuerbare oder selbsttätige Einriegelvorrichtung aufweist. Sobald der stabförmige Träger den Aufnehmer erreicht hat, hält ihn die Einriegelvorrichtung fest. Sie kann beispielsweise durch die Endphase der Übergabebewegung betätigt werden, indem der stabförmige Träger eine federbelastete Klinke auslöst oder einen dreh- oder schiebbaren Riegel betätigt. In ähnlicher Weise kann durch die Bewegung beim Übergeben in die Aufnahme des Halters die Einriegelvorrichtung wieder gelöst werden. Erforderlichenfalls kann man eine entsprechende Einriegelung auch für die Hubeinrichtung vorsehen.

Die Erfindung wird nachstehend anhand der Zeichnung näher erläutert. Die Zeichnung zeigt ein Ausführungsbeispiel der Erfindung. Hierbei stellen dar :

Fig. 1 die erfindungsgemäße Vorrichtung in schematisierter Darstellung mit einer schematisch angedeuteten Portioniervorrichtung,

Fig. 2 eine Vorderansicht der Vorrichtung nach Fig. 1 in Pfeilrichtung A gesehen,

Fign. 3 bis 7 Ausschnitte, die im wesentlichen der Fig. 1 entsprechen, in verschiedenen Stadien der Aufbringung einer Wurstkette auf einem Rauchstab,

Fig. 8 in Vergrößerung einen Ausschnitt gemäß der Einzelheit X der Fig. 1,

Fig. 9 einen Schnitt gemäß der Linie IX-IX der Fig. 8,

Fig. 10 einen Schnitt gemäß der Linie X-X der Fig. 8,

Fig. 11 eine der Fig. 2 entsprechende Darstellung, in größerem Maßstab und bei erweiterter Ausbildung der Vorrichtung,

Fig. 12 eine Ansicht der Fig. 11 in Pfeilrichtung B,

Fign. 13 u. 14 in vergrößerter Darstellung zwei Antriebe der Vorrichtung im Bereich der Schnitte XIII-XIII und XIV-XIV der Fig. 1.

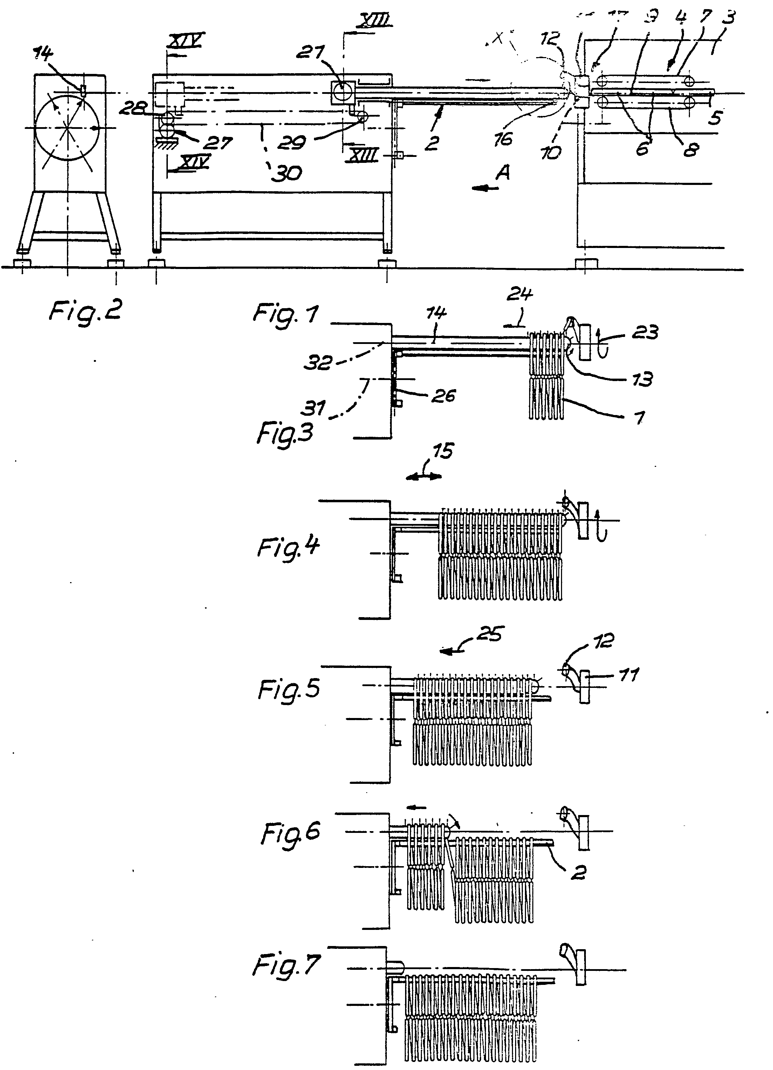

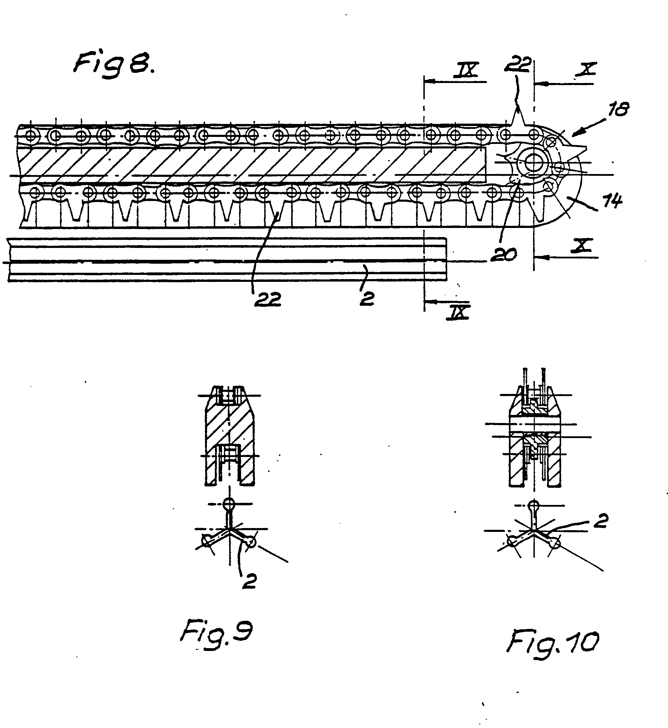

Die Vorrichtung dient, wie gesagt, zum Aufbringen eines ablaufenden Stranges aus einer, mit einem teigigen Medium, insbesondere mit Wurstbrät, gefüllten Wursthülle, auf einem stabförmigen Träger. Im besonderen soll diese Vorrichtung dazu dienen, eine Wurstkette 1 auf einem Rauchstab 2 in Windungen abzulegen. Der Rauchstab 2 hat gemäß Fign. 9 und 10 eine besondere Querschnittsform, die man im wesentlichen als dreizackigen Stern mit wulstartig verdickten Zackenenden beschreiben kann. Somit entsteht einerseits ein durch zwei Zacken gebildeter Fuß zum sicheren Aufstellen des Rauchstabs, was für die automatische Rauchstabübergabe vorteilhaft ist und andererseits eine Art Stützleiste, die leicht zwischen benachbarte Wurstzipfel greifen kann. Man erreicht dadurch ein geordnetes Aufhängen der gemäß Fign. 3 bis 7 in Windungen gelegten Wurstkette, wenn man die Windungen entsprechend der Wurstlänge wählt und vorzugsweise eine Windung aus einer geraden Wurstzahl, beispielsweise aus vier Würsten, bildet.

Mit Hilfe einer Wurstfüllmaschine 3 wird das teigige Medium — nachstehend wird lediglich noch von Wurstbrät und Würsten gesprochen, ohne daß die einschränkend verstanden werden darf — in die künstliche oder natürliche Wursthülle gefüllt. Eine Portioniervorrichtung 4 unterteilt den ablaufenden Wurststrang 5 in Würste 6, so daß letztlich eine Wurstkette 1 entsteht. Beim Ausführungsbeispiel besteht die Portioniervorrichtung aus zwei übereinander angeordneten endlosen Transportelementen 7 und 8, insbesondere Transportketten, von denen jede in regelmäßigen Abständen eine Quetschplatte trägt. Zwei Quetschplatten bilden jeweils ein Quetschplattenpaar 9, mit welchem der Wurststrang in die Würste 6 unterteilt wird, wobei zugleich eine Drehung um die Längsachse stattfindet, um bleibende Wurstzipfel zu erhalten.

Die ablaufende Wurstkette 1 durchsetzt den Durchlaß 10 eines Auflegekopfes 11, an welchem exzentrisch ein Mitnehmerfinger 12 befestigt ist. Er rotiert um das freie, seine Bewegungsbahn durchsetzende Ende 13 eines Auflegerarms 14. Dieser ist im Sinne des Doppelpfeils 15 hin und her verschiebbar. Zu Beginn des Aufwickelvorganges durchsetzt dieses freie Ende, wie gesagt, den Flugkreis des Mitnehmerfingers 12, was der einen Endstellung des Auflegerarms entspricht. Außerdem wird dabei vorzugsweise das freie Ende 16 des Rauchstabs 2 überragt. Beide sind gemäß den Fign. 8 und 9 in paralleler Zuordnung, wobei sich der Auflegerarm 14 über dem Rauchstab 2 befindet. Des weiteren entnimmt man der Fig. 1, daß die geometrische Achse des Auflegerarms 14 und die Drehachse des Auflegerkopfes 11 koaxial zueinander verlaufen und auch die geometrische Achse der Wurstkette 1 dazu etwa koaxial angeordnet ist. Der Durchlaß 10 des Auflegekopfes, 11 ist dem Auslaß 17 der Portioniervorrichtung 4 unmittelbar vorgelagert.

Der Auflegerarm 14 ist mit einer Fördervorrichtung 18 ausgestattet (Fig. 8). Ihre Bewegungsrichtung verläuft in Längsrichtung des Auflegerarms. Sie besitzt ein endloses umlaufendes Förderelement 19, welches vorzugsweise als Kette ausgebildet .ist, die über zwei den beiden Enden des Auflegerarms zugeordnete Kettenräder 20 umgelenkt wird. Die Fördervorrichtung 18 wird vorzugsweise taktweise, evtl. auch kontinuierlich mittels eines Getriebemotors 21 angetrieben. Es ist sowohl ein Rechts — als auch ein Linkslauf möglich. Die Geschwindigkeit ist stufenlos regelbar. Auch diese Bewegung wird durch den Doppelpfeil symbolisiert. Die Förderkette trägt über wenigstens einen Teil ihrer Länge Mitnehmerzähne 22. Sie sind vorzugsweise einstückig mit Elementen eines Kettenglieds hergestellt. Fig. 8 zeigt die Ausgangslage der Förderkette bei einer lediglich über eine Teillänge mit Mitnehmerzähnen 22 versehenen Ausführung vor Beginn der Windungsbildung.

Beim Ausführungsbeispiel wird der Mitnehmerfinger 12 im Sinne des Pfeils 23 absatzweise nach jeweils vier Würsten 6 angetrieben. Dadurch entstehen vier Würste umfassende Windungen, die zunächst auf dem Auflegerarm 14 abgelegt werden. Um einen zweiten Abstand der Windungen zu erzielen, muß die Fördervorrichtung 18 im Sinne des Pfeils 24 mit der notwendigen Geschwindigkeit, wie gesagt insbesondere absatzweise, angetrieben werden. Den Beginn des Auflegens der Wurstkette auf dem Auflegerarm 14 verdeutlicht Fig. 3. Wenn der gesamte Wurststrang 5 die Portioniervorrichtung 4 verlassen hat, sind alle Windungen auf dem Auflegerarm 14 aufgelegt (Fig. 4). Nunmehr wird der Auflegerarm in Richtung des Pfeils 25 zurückgezogen. Fig. 5 zeigt den Beginn dieser Rückhubbewegung. Wenn der stabförmige Träger bzw. Rauchstab 2 das freie Ende 13 des Auflegerarms 14 um beispielsweise 10 cm überragt (Fig. 5), wird die Fördervorrichtung 18 in Gegenrichtung, d. h. entgegen dem Pfeil 25 angetrieben. Dadurch wird eine Windung nach der anderen auf den Rauchstab 2 übertragen, wie dies Fig. 6 verdeutlicht. Wenn die gesamte Wurstkette auf dem Rauchstab aufliegt, nimmt der Auflegerarm 14 seine aus Fig. 7 ersichtliche zurückgezogene Endlage ein. Man kann nummehr den gleichmäßig behängten Rauchstab mitsamt der Wurstkette abnehmen.

Durch die stufenlos regelbare Ablegegeschwindigkeit vom Auflagearm 14 auf den Rauchstab 2 können engere oder weitere Abstände als auf dem Auflegearm abgelegt war, abgelegt werden. Die Abstände auf dem Auflegearm sind bei konstanter Antriebsgeschwindigkeit immer gleich, z. B. 28.575 mm (3 x 3/8" Kettenteilung). Es ist notwendig, die Wurstkette auf dem Rauchstab in ihrem Durchmesser entsprechenden Abständen (z. B. bei Wurstdurchmesser 28 mm sollte der Abstand ca. 35 mm sein) abzulegen. Bei kleineren Wurstdurchmessern, z. B. 19 mm, sollte der Abstand ca. 25 mm auf dem Rauchstab sein, damit eine entsprechend lange Wurstkette gleichmäßig und die ganze Rauchstablänge ausnutzend, abgelegt werden kann. Anschließend muß ein neuer Rauchstab am Halter 26 montiert oder wie nachstehend noch beschrieben wird in Arbeitsstellung gebracht werden.

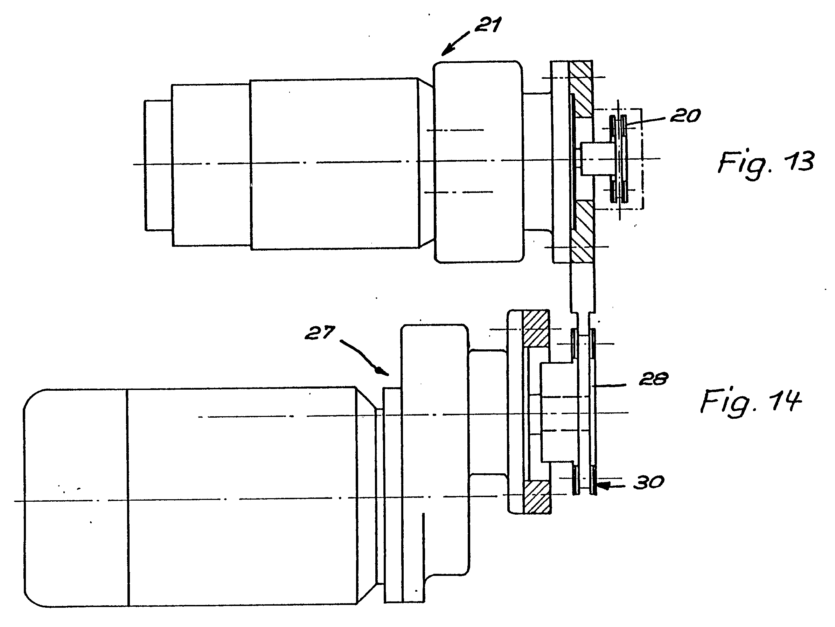

Fig. 13 zeigt den Getriebemotor zum Antrieb der Fördervorrichtung 18. Er ist Bestandteil eines regelbaren, nicht näher dargestellten Schnelltaktantriebs. Auch der Auflegearm 14 ist mittels eines Getriebemotors hin und her verschiebbar. Dieser ist in Fig. 14 in vergrößertem Maßstab zu sehen und er umfaßt auch ein endloses, vorzugsweise ebenfalls als Kette ausgebildetes, über zwei Ritzel 28 und 29 geführtes Förderglied 30 (Fig. 1). Auch letzteres hat einen Rechts- und Linkslauf, um die Hin- und Herbewegung 15 des Auflegearms 14 zu erzeugen.

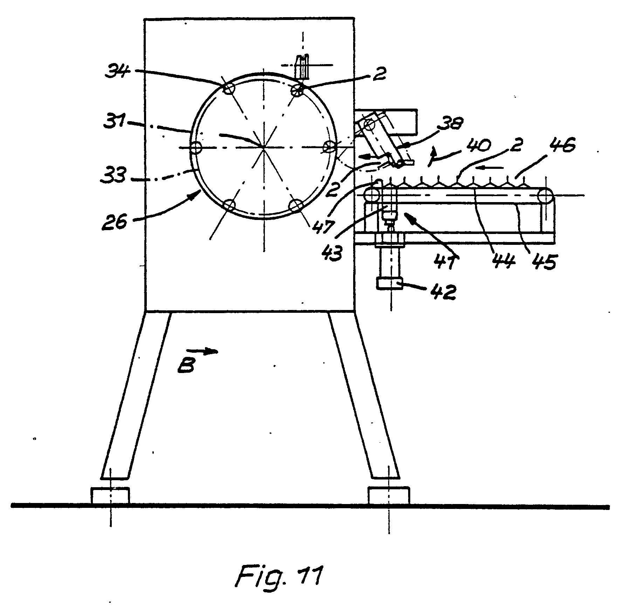

Die Drehachse 31 des Halters 26 verläuft gemäß Fig. 1 parallel zur geometrischen Achse 32 des Auflegerarms 14 und damit auch zur Längsachse des Rauchstabs 2. Er besitzt wenigstens zwei, vorzugsweise aber mehrere, beim Ausführungsbeispiel 6 gleichmäßig entlang einem Kreis 33 (Fig. 11) angeordnete Aufnahmen 34 für je einen Träger 2. Er ist absatzweise antreibbar, wobei der Drehwinkel pro Takt beim Ausführungsbeispiel jeweils 60° beträgt. Hierzu dient ein Getriebemotor 35 mit Bremse 36. Der Getriebemotor treibt jedoch den Halter nicht direkt, sondern indirekt über einen übersetzenden Zahnriemenantrieb 37 an.

Jeder Stabförmige Träger 2 wird mit Hilfe eines Aufnehmers 38 in die Aufnahme 34 des Halters 26 eingesetzt. Infolgedessen muß der Aufnehmer bei koaxialer Ausrichtung des einzusetzenden Rauchstabs 2 und der hierfür vorgesehenen Aufnahme 34 eine Zustellbewegung im Sinne des Pfeils 39 ausführen können. Nach dem Einsetzen des Rauchstabs kehrt er in Gegenrichtung des Pfeils 39 in die Ausgangslage zurück, um einen weiteren Rauchstab 2 zu übernehmen. Zuvor muß er jedoch eine Rückschwenkbewegung im Sinne des Pfeils 40 (Fig. 11) ausführen. Sowohl die Schwenk — als auch die Zustellbewegung kann mit Hilfe von pneumatischen oder hydraulischen Arbeitszylindern vorgenommen werden.

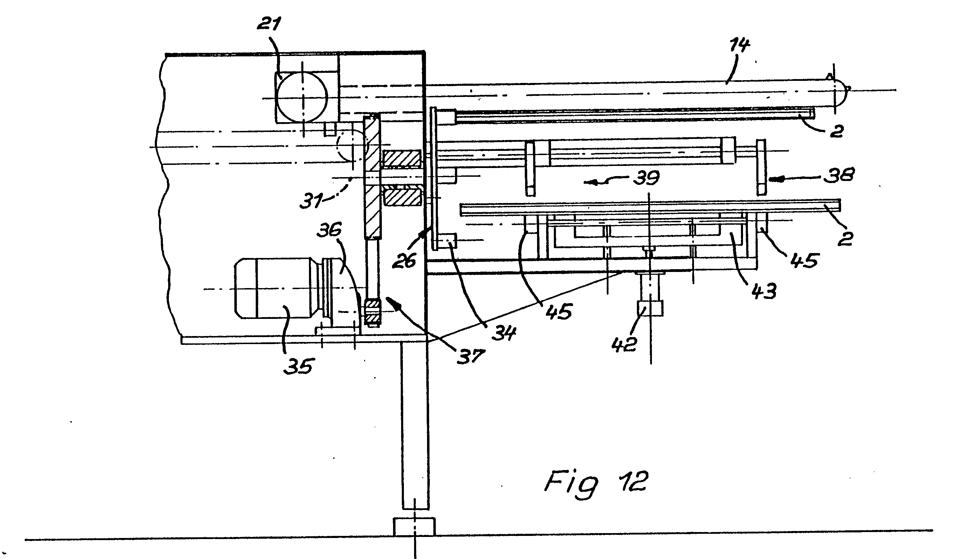

Wenn der Aufnehmer 38 seine in Fig. 11 gezeigte erste Schwenkendstellung eingenommen hat, ist er einer Übergabeeinrichtung 41 zugeordnet. Diese ist vorzugsweise als Hubeinrichtung ausgebildet und infolgedessen mit einem weiteren Arbeitszylinder 42 versehen. Die Fign. 11 und 12 zeigen die Übergabeeinrichtung 41 in ihrer unteren Endstellung. Dabei befindet sich ihre Stützeinrichtung 43 unterhalb der Ebene des tragenden Trumms 44 eines endlosen Förderglieds, insbesondere Förderbands 45, einer Zuführvorrichtung 46. Beim Ausführungsbeispiel ist nicht nur ein Förderband 45 vorhanden, sondern ein Förderbandpaar 45. Die beiden Förderbänder des letzteren sind so weit voneinander entfernt, daß dazwischen die Stützeinrichtung 43 der Übergabeeinrichtung 41 Platz hat. Letztere befindet sich im Bereich des dem Aufnehmer 38 zugeordneten Endes der Zuführvorrichtung 46, wie Fig. 11 der Zeichnung zeigt. Dort ist auch noch ein Anschlag 47 angebracht, in welchem die Rauchstäbe 2, welche von Hand auf die Zuführvorrichtung 46 aufgelegt werden können, aufläuft. Wenn der am Anschlag 47 anliegende Rauchstab 2 mittels der Stützeinrichtung 43 hochgehoben an den Aufnehmer 38 abgegeben wird und auf die Ausgangsstellung zurückgeht, setzt man die Zuführvorrichtung 46 kurz in Gang, um die aufliegenden Rauchstäbe bis zum Anschlag 47 vorzutransportieren. Die Zuführeinrichtung könnte auch dauernd laufen, wenn der Rauchstab am Anschlag 47 anliegt, rutscht das Förderbandpaar 45 durch und weitere Rauchstäbe werden nachgeschoben. Das Einwechseln eines neuen Rauchstabs 2 in die Aufnahme 34 des Halters 26 erfolgt vorteilhafterweise während des Aufziehens einer gerafften Wursthülle auf das Füllrohr der Wurstfüllmaschine 3, sodaß insoweit keinerlei Zeitverlust eintritt. Damit der übergebene Rauchstab 2 beim Zurückziehen der Stützeinrichtung 43 der Übergabeeinrichtung 41 am Aufnehmer 38 verbleibt, besitzt dieser an seinem schwenkachsfernen Ende eine nicht näher dargestellte Einriegelvorrichtung. Diese kann so ausgebildet sein, daß sie vom eingesetzten Rauchstab bzw. der Endphase seiner Bewegung betätigt wird. Zum Auslösen, d. h. Freigeben der Einriegelvorrichtung kann man die verschiebebewegung in Pfeilrichtung 39 in Verbindung mit einem ortsfesten Auslöser heranziehen.

**Patentansprüche**

1. Vorrichtung zum Aufbringen eines ablaufenden Stranges aus mit teigigem Medium gefüllter Wursthülle auf einen stabförmigen Träger (2), insbesondere einer Wurstkette (1) auf einen Rauchstab, mit einem drehbar gelagerten, vom ablaufenden Strang (5) durchsetzbaren Auflegekopf (11), der zumindest beim Übergeben des Wurststrangs (5) dem freien Ende des Trägers (2) vorgelagert sowie zwischen diesem und dem Auslaß einer Portioniervorrichtung (4) angeordnet ist und einen exzentrisch angesetzten, den ablaufenden Strang untergreifenden Mitnehmer aufweist, wobei die Drehachse des Auflegekopfes (11) parallel zur Träger-Längsachse und zur Längsachse des ablaufenden Wurststrangs (5) verläuft, und mit einer Fördereinrichtung (18) für die durch den Mitnehmer gebildeten Wurstschlaufen mit einer zumindest vom Auflegekopf weg gerichteten Förderrichtung (24), dadurch gekennzeichnet, daß der Mitnehmer als Mitnehmerfinger (12) ausgebildet und koaxial zur Drehachse des Auflegekopfes (11) ein Auflegerarm (14) angeordnet sowie relativ zu dem unter ihm gelegenen Träger (2) verschiebbar ist, wobei der Auflegerarm (14) mit der Fördervorrichtung (18) versehen ist, die in Längsrichtung an ihm wahlweise nach entgegengesetzten Richtungen (15) bewegbar ist, wobei ferner die Fördervorrichtung (18) nur in der vom Auflegekopf (11) entfernten Verschiebelage gegen den Auflegekopf hin fördert.

2. Vorrichtung nach Anspruch 1, dadurch gekennzeichnet, daß die Fördervorrichtung (18) des Auflegerarms (14) ein endloses umlaufendes Förderelement (19) aufweist.

3. Vorrichtung nach Anspruch 2, dadurch gekennzeichnet, daß das Förderelement (19) der Fördervorrichtung (18) des Auflegerarms (14) eine endlose Kette ist, wobei die Kette über wenigstens einen Teil ihrer Länge mit Mitnehmerzähnen (22) versehen ist.

4. Vorrichtung nach wenigstens einem der vorhergehenden Ansprüche, dadurch gekennzeichnet, daß der Mitnehmerfinger (12) absatzweise antreibbar ist.

5. Vorrichtung nach Anspruch 4, dadurch gekennzeichnet, daß der Takt des Antriebs des Mitnehmerfingers (12) mit dem Takt einer taktweise arbeitenden Portioniervorrichtung (4) synchronisierbar ist.

6. Vorrichtung nach wenigstens einem der vorhergehenden Ansprüche, dadurch gekennzeichnet, daß die Fördervorrichtung (18) des Auflegerarms (14) taktweise oder kontinuierlich mittels eines Getriebemotors (21) antreibbar ist.

7. Vorrichtung nach Anspruch 6, dadurch gekennzeichnet, daß die Fördervorrichtung des Auflegerarms (14) mittels eines, insbesondere an dessen mitnehmerfingerfernem Ende angebrachten regelbaren Schnelltaktantriebs (27) taktweise antreibbar ist.

8. Vorrichtung nach wenigstens einem der vorhergehenden Ansprüche, dadurch gekennzeichnet, daß der Auflegerarm (14) mittels eines Getriebemotors (27) hin und her verschiebbar ist, der eine endlose Antriebskette od. dgl. antreibt, welche insbesondere mit dem mit nehmerfingerfernen Ende des Auflegerarms (14) verbunden ist.

9. Vorrichtung nach wenigstens einem der vorhergehenden Ansprüche, dadurch gekennzeichnet, daß das freie Ende (13) des Auflegerarms (14) dasjenige des stabförmigen Trägers (2) beim Aufbringen des ablaufenden Stranges (5) geringfügig überragt.

10. Vorrichtung nach wenigstens einem der vorhergehenden Ansprüche, dadurch gekennzeichnet, daß der stabförmige Träger (2) an einem drehbaren, insbesondere scheibenförmigen Halter (26) abnehmbar befestigt ist, wobei die Drehachse des Halters parallel zur Längsachse des Trägers (2) verläuft.

11. Vorrichtung nach Anspruch 10, dadurch gekennzeichnet, daß der Halter (26) für den stabförmigen Träger (2) wenigstens zwei, insbesondere aber mehrere gleichmäßig entlang einem Kreis (33) angeordnete Aufnahmen (34) für je einen Träger (2) aufweist.

12. Vorrichtung nach Anspruch 11, dadurch gekennzeichnet, daß der Halter (26) für die stabförmigen Träger (2) absatzweise antreibbar ist.

13. Vorrichtung nach Anspruch 12, dadurch gekennzeichnet, daß der Halter (26) für die stabförmigen Träger mittels eines Getriebemotors (35) mit Bremse (36) antreibbar ist.

14. Vorrichtung nach Anspruch 13, dadurch gekennzeichnet, daß der Halter (26) für die stabförmigen Träger (2) indirekt über einen, insbesondere übersetzenden Zahnriemenantrieb (37) od. dgl. antreibbar ist.

15. Vorrichtung nach wenigstens einem der Ansprüche 10 bis 14, dadurch gekennzeichnet, daß jeder stabförmige Träger (2) mittels eines Aufnehmers (38) in seine Aufnahme (34) des Halters (26) einsetzbar ist.

16. Vorrichtung nach Anspruch 15, dadurch gekennzeichnet, daß der Aufnehmer (38) eine in Längsrichtung des stabförmigen Trägers (2) verlaufende Montagebewegung (39) und eine quer dazu verlaufende Schwenkbewegung (40) durchführen kann, wobei der Aufnehmer (38) in der ersten Schwenkendstellung einer Übergabeeinrichtung (41) und in der zweiten Schwenkendstellung einer Aufnahme (34) des Halters (26) zugeordnet ist.

17. Vorrichtung nach Anspruch 16, dadurch gekennzeichnet, daß die Übergabeeinrichtung (41) als Hubeinrichtung ausgebildet ist, die in ihrer einen Endstellung einer Zuführvorrichtung (46) für die stabförmigen Träger (2) und in ihrer anderen, insbesondere oberen Endstellung, dem Aufnehmer (38) zugeordnet ist.

18. Vorrichtung nach Anspruch 17, dadurch gekennzeichnet, daß die Zuführvorrichtung (46) aus wenigstens einem, vorzugsweise aber zwei im seitlichen Abstand angeordneten, antreibbaren, endlosen Förderbändern (45) besteht, die quer zu den Längsachsen der aufgelegten stab-

förmigen Träger (2) antreibbar sind.

19. Vorrichtung nach Anspruch 18, dadurch gekennzeichnet, daß sich die Übergabeinrichtung (41) zwischen den beiden Förderbändern (45) befindet.

20. Vorrichtung nach wenigstens einem der Ansprüche 17 bis 19, dadurch gekennzeichnet, daß sich am Ende der tragenden Trumme (44) der Zuführvorrichtung (46) ein Anschlag (47) für die stabförmigen Träger (2) befindet.

21. Vorrichtung nach wenigstens einem der Ansprüche 15 bis 20, dadurch gekennzeichnet, daß der Aufnehmer (38), insbesondere an seinem drehachsfernen Ende eine steuerbare oder selbsttätige Einriegelvorrichtung aufweist.

## Claims

1. Apparatus for delivering an emerging rod comprising sausage casing filled with a pasty medium onto a bar-like carrier (2), particularly for delivering a sausage chain (1) to a smoking bar, and comprising a rotatably mounted feeder head (11) through which the emerging rod (5) can pass, the said head being in front of the free end of the carrier (2) at least during transfer of the sausage rod (5), being further disposed between the carrier (2) and the outlet from an apportioning device (4) and comprising an eccentrically mounted drive means which engages under the emerging rod, the axis of rotation of the feeder head (11) extending parallel with the longitudinal axis of the carrier and the longitudinal axis of the emerging sausage rod (5), and having a conveying means (18) for the sausage loops formed by the drive means, the direction of conveyance (24) being directed away from at least the feeder head, characterised in that the drive means take the form of finger-like drive members (12), a feeder arm (14) being disposed coaxially of the axis of rotation of the feeder head (11) and displaceable relative to the carrier (2) situated beneath it, the feeder arm (14) being provided with the conveyer device (18) which is adapted for movement in a longitudinal direction on it, optionally in opposite directions (15), the conveyer device furthermore only delivering to the feeder head in the displaced position which is remote from the feeder head (11).

2. Apparatus according to Claim 1, characterised in that the conveyer device (18) of the feeder arm (14) comprises an endless revolving conveyer element (19).

3. Apparatus according to Claim 2, characterised in that the conveyer element (19) of the conveyer device (18) of the feeder arm (14) is an endless chain, the chain being provided with driving teeth (22) over at least a portion of its length.

4. Apparatus according to at least one of the preceding Claims, characterised in that the finger-like drive member (12) is adapted to be driven in a stepwise fashion.

5. Apparatus according to Claim 4, characterised in that the cadence of the drive of the drive finger (12) can be synchronised with the cadence of a cyclically working apportioning device (4).

6. Apparatus according to at least one of the preceding Claims, characterised in that the conveyer device (18) of the feeder arm (14) can be driven cyclically or continuously by means of a geared motor (21).

7. Apparatus according to Claim 6, characterised in that the conveyer device of the feeder arm (14) can be driven cyclically by means of a regulable accelerated-cycle drive (27) mounted in particular on the end remote from the drive fingers.

8. Apparatus according to at least one of the preceding Claims, characterised in that the feeder arm (14) can be reciprocatingly displaced by means of a geared motor (27) which drives an endless driving chain or the like which is in particular connected to that end of the feeder arm (14) which is remote from the drive fingers.

9. Apparatus according to at least one of the preceding Claims, characterised in that the free end (13) of the feeder arm (14) projects slightly beyond that of the bar-like carrier (2) during delivery of the emerging rod (5).

10. Apparatus according to at least one of the preceding Claims, characterised in that the bar-like carrier (2) is removably mounted on a rotatable, particularly a disc-shaped holder (26), the axis of rotation of the holder extending parallel with the longitudinal axis of the carrier (2).

11. Apparatus according to Claim 10, characterised in that the holder (26) for the bar-like carrier (2) has at least two but in particular also a plurality of housings (34) disposed regularly along a circle (33) each of which is adapted to accommodate a carrier (2).

12. Apparatus according to Claim 11, characterised in that the holder (26) for the bar-like carriers (2) can be driven in a stepwise fashion.

13. Apparatus according to Claim 12, characterised in that the holder (26) for the bar-like carriers can be driven by means of a geared motor (35) with a brake (36).

14. Apparatus according to Claim 13, characterised in that the holder (26) for the bar-like carriers (2) can be driven indirectly via a toothed belt drive (37) or the like, particularly one which has a geared transmission.

15. Apparatus according to at least one of Claims 10 to 14, characterised in that each bar-like carrier (2) can be inserted into its housing (34) in the holder (26) by means of a pick-up (38).

16. Apparatus according to Claim 15, characterised in that the pick-up (38) can perform a fitting movement (39) which extends in the longitudinal direction of the bar-like carrier (2) and a pivoting movement (40) which extends transversely thereto, the pick-up (38) being in the first extreme pivoted position associated with a transfer device (41), being associated, while in the second extreme pivoted position, with a housing (34) in the holder (26).

17. Apparatus according to Claim 16, characterised in that the transfer device (41) is constructed as a lifting device which in one extreme position is associated with a feed device (46) for the bar-like carriers (2) and in its other, particularly its extreme upper position, with the pick-up (38).

18. Apparatus according to Claim 17, characterised in that the feed device (46) consists of at least one but preferably two laterally spaced-apart drivable endless conveyer belts (45) which can be driven transversely of the longitudinal axes of the laid-on bar-like carriers (2).

19. Apparatus according to Claim 18, characterised in that the transfer device (41) is disposed between the two conveyer belts (45).

20. Apparatus according to at least one of Claims 17 to 19, characterised in that at the end of the supporting strand (44) of the feed device (46) there is an abutment (47) for the bar-like carriers (2).

21. Apparatus according to at least one of Claims 15 to 20, characterised in that the pick-up (38) has, particularly at its end which is remote from the axis of rotation, a controllable or automatic releasing device.

**Revendications**

1. Dispositif pour déposer, sur un support (2) en forme de barre, un boudin évacué constitué par une enveloppe de saucisse emplie d'une substance pâteuse, en particulier un chapelet (1) de saucisses sur une barre de fumage, comprenant une tête de présentation (11) qui est montée rotative, peut être traversée par le boudin évacué (5), est implantée en amont de l'extrémité libre du support (2), au moins lors du transfert du boudin de saucisse (5), est intercalée entre ledit support et la sortie d'un dispositif de segmentation (4), et présente un organe d'entraînement rapporté excentriquement et emprisonnant par-dessous le boudin évacué, l'axe de rotation de la tête de présentation (11) s'étendant parallèlement à l'axe longitudinal du support et à l'axe longitudinal du boudin de saucisse évacué (5) ; ainsi qu'un dispositif (18) de convoyage des boucles de saucisses formées par l'intermédiaire de l'organe d'entraînement, avec une direction de convoyage (24) tournée au moins à l'opposé de la tête de présentation, caractérisé par le fait que l'organe d'entraînement est réalisé sous la forme d'un doigt d'entraînement (12), un bras de présentation (14) étant disposé coaxialement à l'axe de rotation de la tête de présentation (11), et pouvant coulisser par rapport au support (2) qui lui est sous-jacent ; le bras de présentation (14) étant muni du dispositif de convoyage (18) qui peut y être sélectivement animé de mouvements, dans le sens longitudinal, vers des directions opposées (15) ; le dispositif de convoyage (18) assurant en outre un acheminement, vers la tête de présentation, seulement dans la position prise par coulissement qui est éloignée de cette tête de présentation (11).

2. Dispositif selon la revendication 1, caractérisé par le fait que le dispositif de convoyage (18) du bras de présentation (14) comporte un élément convoyeur (19) sans fin, accomplissant une révolution.

3. Dispositif selon la revendication 2, caractérisé par le fait que l'élément convoyeur (19) du dispositif de convoyage (18) du bras de présentation (14) est une chaîne sans fin, cette chaîne étant pourvue de dents d'entraînement (22) sur au moins une partie de sa longueur.

4. Dispositif selon au moins l'une des revendications précédentes, caractérisé par le fait que le doigt d'entraînement (12) peut être mené par paliers.

5. Dispositif selon la revendication 4, caractérisé par le fait que la cadence du système menant le doigt d'entraînement (12) peut être synchronisée avec la cadence d'un dispositif de segmentation (4) fonctionnant par saccades.

6. Dispositif selon au moins l'une des revendications précédentes, caractérisé par le fait que le dispositif de convoyage (18) du bras de présentation (14) peut être entraîné avec fréquence rythmée ou en continu, au moyen d'un moteur (21) à engrenages.

7. Dispositif selon la revendication 6, caractérisé par le fait que le dispositif de convoyage du bras de présentation (14) peut être entraîné avec fréquence rythmée, au moyen d'un entraînement réglable (27) à cadence rapide installé, en particulier, à l'extrémité dudit bras qui est éloigné du doigt d'entraînement.

8. Dispositif selon au moins l'une des revendications précédentes, caractérisé par le fait que le bras de présentation (14) peut être animé d'un coulissement alternatif au moyen d'un moteur (27) à engrenages qui mène une chaîne sans fin d'entraînement ou élément similaire relié(e), en particulier, à l'extrémité du bras de présentation (14) qui est éloigné du doigt d'entraînement.

9. Dispositif selon au moins l'une des revendications précédentes, caractérisé par le fait que l'extrémité libre (13) du bras de présentation (14) fait légèrement saillie, lors de la mise en place du boudin évacué (5), au-delà de celle du support (2) en forme de barre.

10. Dispositif selon au moins l'une des revendications précédentes, caractérisé par le fait que le support (2) en forme de barre est fixé de manière libérable à un élément de retenue rotatif (26), notamment discoïdal, l'axe de rotation de l'élément de retenue s'étendant parallèlement à l'axe longitudinal du support (2).

11. Dispositif selon la revendication 10, caractérisé par le fait que l'élément (26) de retenue du support (2) en forme de barre présente au moins deux, en particulier cependant plusieurs logements (34) qui reçoivent chacun un support (2), et sont agencés uniformément le long d'une circonférence (33).

12. Dispositif selon la revendication 11, caractérisé par le fait que l'élément (26) de retenue des supports (2) en forme de barre peut être entraîné par paliers.

13. Dispositif selon la revendication 12, caractérisé par le fait que l'élément (26) de retenue des supports en forme de barre peut être entraîné au moyen d'un moteur (35) à engrenages, équipé d'un frein (36).

14. Dispositif selon la revendication 13, caractérisé par le fait que l'élément (26) de retenue des supports (2) en forme de barre peut être entraîné indirectement par l'intermédiaire d'un entraînement (37) à courroie crantée ou système similaire, notamment démultiplicateur.

15, Dispositif selon au moins l'une des revendications 10 à 14, caractérisé par le fait que chaque support (2) en forme de barre peut être introduit, au moyen d'une pièce réceptrice (38), dans son logement (34) de l'élément de retenue (26).

16. Dispositif selon la revendication 15, caractérisé par le fait que la pièce réceptrice (38) peut accomplir un mouvement de montage (39) s'opérant dans le sens longitudinal du support (2) en forme de barre et un mouvement de pivotement (40) s'opérant transversalement par rapport audit mouvement, cette pièce réceptrice (38) étant associée à un dispositif de transfert (41) dans la première position extrême prise par pivotement, et à un logement (34) de l'élément de retenue (26) dans la seconde position extrême prise par pivotement.

17. Dispositif selon la revendication 16, caractérisé par le fait que le dispositif de transfert (41) est conçu en tant que dispositif de levage qui est associé à un dispositif (46) d'amenée des supports en forme de barre dans l'une de ses positions extrêmes, et à la pièce réceptrice (38) dans son autre position extrême, notamment supérieure.

18. Dispositif selon la revendication 17, caractérisé par le fait que le dispositif d'amenée (46) consiste en au moins une, de préférence cependant en deux bandes convoyeuses sans fin (45) entraînables, qui se trouvent à distance latérale et peuvent être menées transversalement par rapport aux axes longitudinaux des supports (2) en forme de barre reposant à plat.

19. Dispositif selon la revendication 18, caractérisé par le fait que le dispositif de transfert (41) se trouve entre les deux bandes convoyeuses (45).

20. Dispositif selon au moins l'une des revendications 17 à 19, caractérisé par le fait qu'une butée (47), associée aux supports (2) en forme de barre, se trouve à l'extrémité des brins porteurs (44) du dispositif d'amenée (46).

21. Dispositif selon au moins l'une des revendications 15 à 20, caractérisé par le fait que la pièce réceptrice (38) présente, notamment à son extrémité éloignée de l'axe de rotation, un dispositif de verrouillage commandable ou automatique.

Fig.2

Fig. 1

Fig.3

Fig.4

Fig.5

Fig.6

Fig.7

Fig 8.

Fig. 9

Fig. 10

Fig. 11

Fig 12

EP 0 189 763 B1

Fig. 13

Fig. 14